# FASCICULE DE BREVET EUROPEEN

(11) **EP 3 427 000 B1**
(45) Date de publication et mention de la délivrance du brevet: **07.04.2021**
(21) Numéro de dépôt: 17715220.4
(22) Date de dépôt: 09.03.2017
(51) Int. Cl.: F28D 20/02

(54) **BARRIERE THERMIQUE ISOLANTE A MCP CHAUD ET FROID**
ISOLIERENDE WÄRMEBARRIERE MIT HEISSEM UND KALTEM PCM
INSULATING THERMAL BARRIER HAVING HOT AND COLD PCM

(30) Priorité: 11.03.2016 FR 1652069
(43) Date de publication de la demande: 16.01.2019
(73) Titulaire: Hutchinson, 75008 Paris (FR)
(72) Inventeur: CHOPARD, Fabrice, 38400 Saint Martin d`Heres (FR); HUILLET, Cédric, 45200 Montargis (FR); GEFFRAY, Fanny, 35000 Rennes (FR)
(74) Mandataire: Ernest Gutmann - Yves Plasseraud S.A.S.
(86) Numéro de dépôt international: PCT/FR2017/050541
(87) Numéro de publication internationale: WO 2017/153694

(56) Documents cités:
- WO-A1-95/29057
- WO-A1-03/073030
- US-A- 4 572 864
- US-A- 5 637 389

## Description

La présente invention concerne le domaine de la gestion thermique. Est concernée en particulier un ensemble comprenant un volume et une barrière thermique, l'ensemble étant tel que défini par le préambule de la revendication 1, et tel que divulgué par le document WO 03/073030A1

Parmi les applications visées, on relèvera :
- celle de la gestion thermique d'une batterie d'accumulateurs électriques,
- ou encore, sur un moteur qui typiquement chauffe lorsqu'il fonctionne, 15 celle d'un dispositif d'encapsulation d'une partie de ce moteur, par exemple tout ou partie d'un bloc moteur.

Il convient en effet dans certains cas de pouvoir :
- isoler de l'environnement extérieur ledit volume et/ou ledit élément structurel intérieur,
- et/ou agir sur la propagation d'un flux thermique vers ou depuis ce volume ou élément,
- et/ou lisser la température dans ledit volume ou dans une partie au moins d'une paroi avec lequel il peut être en contact,
- ou au contraire favoriser une montée en température dans le volume,
- ou encore, favoriser un stockage temporaire de chaleur dans la barrière.

C'est dans ce contexte qu'il est ici proposé un ensemble tel que défini par la revendication 1.

Pour la performance de l'isolation thermique, il est conseillé que le troisième élément isolant thermique contienne un matériau poreux (voire nano-poreux).

Et encore à cette fin et/ou à des fins potentiellement mécaniques, il est par ailleurs recommandé que ce troisième élément isolant thermique soit disposé dans une enveloppe étanche, pour définir au moins un panneau isolant sous atmosphère contrôlée, PIV.

En effet, les panneaux PIV sont connus comme performants en termes d'isolation thermique. Mais leurs conditions de fabrication ou de mise en œuvre sont souvent imparfaites. Aussi, une solution propose t'elle ici une barrière MCP/PIV, avec des dits premier et second éléments contenant un ou plusieurs matériaux à changement de phase (MCP), cette barrière étant conditionnée de sorte à comprendre au moins une enveloppe extérieure fermée constituée d'au moins une feuille conformable (par exemple flexible) étanche auxdits matériaux MCP et qui contient les premier, second et/ou troisième éléments.

Pour favoriser encore la fiabilité et la tenue mécanique, on peut prévoir que la/lesdites feuilles conformables soient métalliques, et typiquement d'une épaisseur de 0.05mm à 5mm.

Avec de telles solutions, à base métallique ou non, on associera une isolation thermique très performante avec un conditionnement unique (mono ou multi-alvéoles ; voir ci-après) permettant de mettre en place la gestion thermique là où on le souhaite.

En particulier avec une solution de panneau isolant PIV à parois métalliques (alliage compris, tels que de l'acier inoxydable ou de l'aluminium), Il sera même possible de s'écarter d'une plaque PIV plane, en prévoyant que lesdits premier, second et troisième éléments soient moulés dans une forme en trois dimensions et interposés entre deux parois métalliques scellées ensemble de façon étanche à l'air, sur toute leur périphérie, pour présenter un taux de fuite inférieur ou égal à 10⁻⁴Pa.m³/s, à l'endroit du/des scellements.

Pour optimiser encore la protection thermique, il pourra être utile que l'un au moins des premier élément et second élément de barrière thermique contienne plusieurs matériaux MCP stockant ou cédant de l'énergie thermique par changement de phases, entre liquide et solide, et ayant des températures de changement d'état différentes.

Ainsi, on pourra échelonner des effets barrière au passage de flux thermiques perturbateurs du maintien en température dudit volume intérieur.

Par ailleurs, plusieurs situations de gestion thermique pourront se présenter, suivant les applications.

D'abord, dans nombre de cas, notamment de gestion thermique d'une batterie électrique logée dans le volume intérieur, ou d'un habitacle, il sera recommandé que la ou les températures de changement d'état du ou des matériaux MCP du premier élément soi(en)t inférieure(s) à la, ou aux, température(s) de changement d'état du ou des matériaux MCP du second élément de barrière thermique, de telle sorte qu'à certaines températures, des flux thermiques venant de l'extérieur et atteignant l'un et/ou l'autre desdits éléments soient freinés dans leur progression de l'extérieur vers l'intérieur, par changement d'état du(des) MCP dans le(s)dit(s) élément(s) atteint(s).

Ceci est un complément ou une alternative à l'effet barrière précité, chaque élément jouant au mieux son rôle d'un flux chaud ou d'un flux froid.

Et disposer d'une barrière thermique où la ou certaines au moins des températures de changement d'état du ou des matériaux MCP du premier élément sera(seront) inférieure(s) aux températures de ladite plage prédéterminée de température à maintenir, pourra même être encore plus profitable, comme détaillé ci-après.

A ce sujet, on peut dès à présent relever que, si les MCP de l'élément intérieur cristallisent (par pénétration de froid dans la barrière, suite par exemple à sa mise en place sur un véhicule prévu pour être stationné par nuits froides à l'extérieur), ils pourront favorablement se recharger en repassant à l'état liquide, le moment venu, au contact d'un flux thermique créé par l'échange avec le volume intérieur ou avec l'élément qui y est disposé : flux chaud dans le cas par exemple d'une batterie qui, en fonctionnant, libère de la chaleur.

Y compris dans ces situations, et pour assurer au mieux la complémentarité des effets barrière vis-à-vis du chaud et du froid, on pourra choisir :
- que la température de changement d'état la plus haute dans ledit premier élément de barrière thermique soit égale, à moins de 5°C près environ, à la température la plus basse de ladite plage prédéterminée de température à maintenir,
- et/ou que la température de changement d'état la plus basse dans ledit second élément de cette barrière thermique soit égale, à moins de 5°C près environ, à la température la plus haute de ladite plage prédéterminée de température à maintenir.

Dans le cas d'un ensemble comprenant au moins un volume entouré par une paroi pourvue de la barrière thermique précité, prévoir des cellules de batterie électrique en tant qu'élément présent dans le volume dont la température est à réguler pourra s'avérer très utile.

En particulier, au moins une cellule de cette batterie pourra alors comporter une enveloppe extérieure pourvue de ladite barrière thermique.

Par ailleurs, cette situation sera un bon exemple de cas favorable où un tel ensemble à barrière thermique comprendra des moyens d'apport temporaire dans le ledit volume intérieur d'une énergie thermique, en échange thermique avec ledit premier élément contenant au moins un matériau MCP, pour favoriser alors un changement de phases dudit matériau MCP de ce premier élément.

Apporter de l'air climatisé dans un habitacle entouré au moins localement par cette barrière thermique pourrait constituer un autre cas favorable.

Dans le cas d'une climatisation chaude, et dans une application à une batterie électrique, par exemple, il est même conseillé que les moyens d'apport temporaire d'énergie thermique et ledit volume intérieur communiquent entre eux de telle sorte que ladite énergie soit apportée dans ce volume à une température supérieure ou égale à la (aux) température(s) de changement d'état du ou des matériaux MCP du premier élément, en échange thermique avec ce ou ces matériaux MCP, pour favoriser alors leur liquéfaction.

Par temps extérieur froid, ils seront ainsi régénérés, prêts à se solidifier face à du froid venant de l'extérieur.

Il se peut toutefois que, dans une seconde catégorie de situations, l'on ait à favoriser/accélérer une montée en température dans le volume intérieur, par exemple pour la gestion thermique d'un moteur thermique que l'on entourerait localement de ladite barrière thermique, ou encore d'un système de dépollution sur une ligne d'échappement de véhicule dans laquelle on souhaite une élévation thermique rapide.

Dans de tels cas, on choisira de préférence que la ou les des températures de changement d'état du ou des matériaux MCP du premier élément (intérieur) est(soient) inférieure(s) à la, ou aux, température(s) de changement d'état du ou des matériaux MCP du second élément (plus extérieur), pour freiner, par changement d'état, un transfert thermique de l'intérieur vers l'extérieur issu de l'apport dans le volume intérieur d'un fluide à au moins une température supérieure ou égale à celle(s) de changement d'état du ou des matériaux MCP dudit premier élément, favorisant ainsi (ou accélérant) une montée en température dans le volume intérieur.

Dans cette seconde catégorie de situations, on pourra prévoir utilement que la barrière thermique soit placée dans un environnement extérieur :
- périodiquement plus chaud (du fait de la chaleur dégagée par le fonctionnement du moteur) que la ou les températures de changement d'état du ou des matériaux MCP du second élément,
- et avec lequel ce ou ces matériaux MCP dudit second élément seront placés en échange thermique,
pour favoriser alors leur(s) liquéfaction(s).

Ainsi, on pourra assurer la régénération des MCP les plus extérieurs lorsque chauffera un moteur, par exemple un moteur encapsulé au moins localement par la barrière ici présentée.

Dans tous les cas précédents, on pourra avoir intérêt à ce que ledit troisième élément isolant thermique soit disposé entre les premier et second éléments respectivement intérieur et extérieur de la barrière thermique.

En effet, bien que non indispensable, ceci distinguera bien les deux blocs de MCP, respectivement froids et chauds, avec chacun sa fonction, l'isolant thermique intermédiaire permettant de ralentir l'influence de l'un sur l'autre.

A priori dans toutes les applications visées, on pourra en outre avoir intérêt à ce que, si plusieurs matériaux MCP ayant des températures de changement d'état différentes sont prévus dans l'un au moins des premier et second éléments, ces MCP soient plutôt dispersés dans une matrice que disposés dans plusieurs couches de matériaux contenant chacune un dit matériau MCP.

Ainsi on obtiendra une gestion thermique par zones, plutôt que par strates, améliorant de la sorte l'efficacité de cette gestion ou à tout le moins la fabrication de la barrière.

De ce qui précède, on aura compris que, traduite en termes de procédé de gestion thermique, la solution présentée ci-avant a pour particularité que:
-- on réalisera toujours la barrière thermique, avec des matériaux MCP à changement de phases entre liquide et solide,
-- puis on la disposera autour dudit volume intérieur, ou de l'élément disposé dedans, de nouveau de sorte que lesdits premier et/ou second éléments de barrière thermique freinent, par changements d'états, un flux thermique venant de l'extérieur,

- par ailleurs, une fois réalisé le changement d'états dudit au moins un matériau MCP du premier élément de barrière thermique, on favorisera un nouveau changement de son état par un apport temporaire d'énergie thermique issue desdits moyens (20,22;24;26) d'apport temporaire d'énergie thermique.

Si nécessaire, l'invention sera encore mieux comprise et d'autres caractéristiques, détails et avantages de celle-ci apparaîtront encore à la lecture de la description qui suit, faite à titre d'exemple non limitatif et en référence aux dessins annexés, dans lesquels :
- la figure 1 est une coupe schématique illustrant une moitié de barrière thermique selon l'invention ;
- la figure 2 schématise l'application d'une barrière thermique selon l'invention à des cellules d'un pack batterie ;
- la figure 3 est un schéma du mode de fonctionnement d'une barrière thermique selon l'invention ;
- les figures 4 à 7 schématisent le fonctionnement en double barrière thermique de la solution proposée, dans une application par exemple batteries respectivement prismatique et « d'un nouveau type » figures 4,5 et de gestion de confort dans un habitacle de camping-car, figures 6,7; il pourrait aussi s'agir de la cabine d'un camion, ou encore d'une serre ;
- les figures 8,9 sont des schémas en perspective de la barrière, dans deux réalisations différentes ;
- les figures 10-13 schématisent en coupe différentes réalisations de tronçons de barrière thermique qui, au moins à l'endroit des poches précitées, peuvent chacune présenter la structure interne de la figure 1, ou une structure comme décrit ci-après,
- la figure 14 schématise des MCP chauds et froids respectivement dispersés, pour les premiers d'un côté, pour les seconds de l'autre d'une couche intermédiaire thermiquement isolante,
- et la figure 15 schématise le fonctionnement en double barrière thermique de la solution proposée, dans une application de bouclier de moteur.

Dans ce qui suit on va donc traiter, à titre d'exemples non limitatifs :
- du cas d'une batterie d'accumulateurs,
- du cas d'un habitacle de camping-car,
- du cas d'un dispositif de protection thermique extérieur d'un moteur, respectivement pourvus d'une barrière thermique répondant à tout ou partie des caractéristiques précitées.

A titre d'unité dans la démarche suivie, notera que la solution de gestion thermique ici proposée doit préférentiellement être autonome, légère et peu encombrante.

A noter aussi que l'industrie est actuellement invitée à accélérer la mise sur le marché de nouvelles technologies pouvant réduire les émissions de polluants, lisser d'éventuelles augmentations ponctuelles de charges ou de gradients thermiques par rapport à un fonctionnement nominal dimensionnant, ou encore proposer des solutions pour décaler dans le temps la restitution d'une énergie disponible à un autre moment, ou favoriser le fonctionnement opérationnel d'un élément dans sa gamme optimale de températures de fonctionnement.

Tout ou partie de la solution ci-avant à matériaux MCP et isolant(s) thermique(s) doit aider à y parvenir.

A toute fin, il est confirmé qu'un matériau à changement de phase - ou MCP, PCM en anglais - désigne un matériau capable de changer d'état physique, entre solide et liquide, dans une plage de température restreinte comprise entre -50°C et 60°C (batterie) voire 160°C (encapsulation moteur). Le transfert de chaleur (ou transfert thermique) peut s'opérer par utilisation de sa Chaleur Latente (CL) : le matériau peut alors stocker ou céder de l'énergie par simple changement d'état, tout en conservant une température sensiblement constante, celle du changement d'état.

Le(s) matériau(x) thermiquement isolant(s) associé(s) au(x) MCP pourra(ont) être un isolant « simple », tel de la laine de verre. Mais on préfèrera certainement, une mousse, par exemple de polyuréthane ou de polyisocyanurate, ou encore plus favorablement un matériau thermiquement isolant poreux, voire nano-poreux, disposé dans une enveloppe étanche, pour définir au moins un panneau PIV.

A nouveau à toute fin :
- par « PIV », on entend une enceinte sous « atmosphère contrôlée », c'est-à-dire soit remplie par un gaz ayant une conductivité thermique inférieure à celle de l'air ambiant (26mW/m.K), soit en « dépression », donc sous une pression inférieure à la pression ambiante (< 10⁵Pa). Une pression entre 10°Pa et 10⁴Pa dans l'enceinte pourra en particulier convenir. L'enceinte pourra contenir au moins un matériau isolant thermique a priori poreux (tailles de pores inférieures à 1 micron). Dans ce cas, la performance de la gestion thermique à assurer sera encore améliorée, voire le poids d'ensemble diminué par rapport à un autre isolant. Typiquement, les panneaux PIV (VIP en anglais) sont des isolants thermiques où au moins un matériau poreux, par exemple en gel de silice ou poudre d'acide silicique (SiO2), est pressé en plaque et entouré, sous vide d'air partiel, d'une feuille enveloppante étanche aux gaz, par exemple en matière plastique et/ou ou aluminium laminé. Le vide obtenu permet typiquement d'abaisser la conductivité thermique à moins de 0,003/0,01 W/m·K environ dans les conditions d'utilisation. On obtient ainsi une efficacité d'isolation 3 à 10 fois supérieure à celle de matériaux isolants plus classiques. Une conductivité thermique À inférieure à 0.008/0,01 W/m.K est ici attendue, de préférence ;
- « poreux » désigne un matériau possédant des interstices permettant le passage de l'air. Les matériaux poreux, à cellules ouvertes, incluent donc les mousses mais également les matériaux fibreux (tels que la laine de verre ou de roche). Les interstices de passage que l'on peut qualifier de pores ont des tailles inférieures à 1 ou 2mm de façon à pouvoir garantir une bonne isolation thermique, et de préférence à 1micron, et préférentiellement encore à 1 à 2x10⁻⁸m (structure quasiment nanoporeuse), pour des questions en particulier de tenue au vieillissement et donc de possible dépression moins forte dans l'enveloppe PIV ;
- « conformable » correspond à une structure que l'on peut déformer, par exemple plier, à la main ;
- « scellable » concerne une liaison soudable, notamment thermosoudable, voire brasable, avec des feuilles ou des films (plus fins), en particulier.

Concernant ces panneaux PIV et matériaux MCP, il est aussi noté qu'ils ne semblent pas répondre jusqu'à présent aux attentes du marché. Notamment, leurs mises en œuvre sur le terrain est un problème, en particulier leur conditionnement. Il y a des solutions ici proposées qui pallient cette situation.

Ainsi, quelles que soient dans une certaine mesure les conditions extérieures (chaud ou froid), l'invention se propose de participer au maintien de la température d'un volume et/ou d'un élément disposé dedans (un pack de batterie par exemple) dans une plage de température optimale, à partir d'un système autonome.

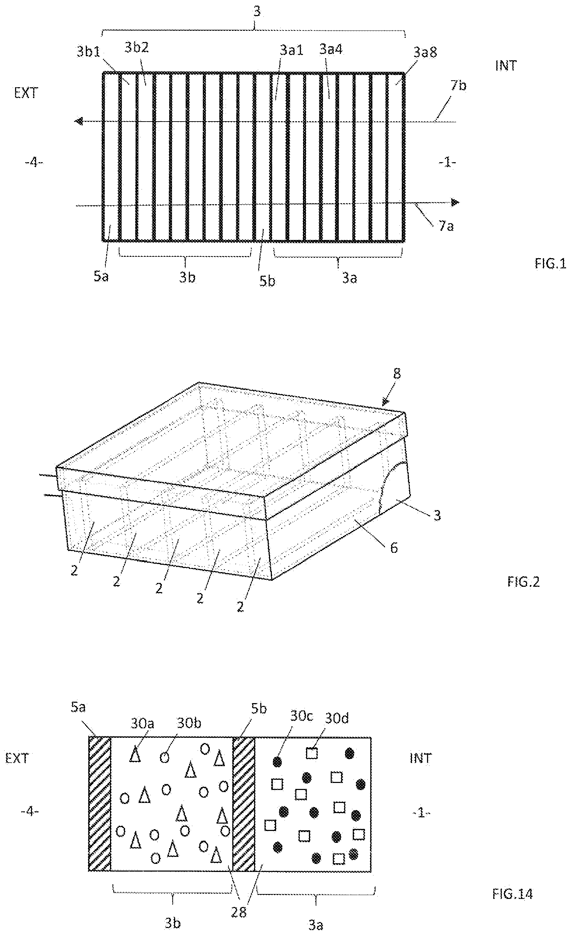

La figure 1 montre donc le principe de la solution développée.

Supposons un bloc, volume (espace creux) ou structure interne, 1, par exemple qui produit de la chaleur à certains moments opérationnels et pas à d'autres, telle une batterie électrique qui chauffe quand ses cellules produisent de l'électricité.

Le bloc intérieur 1 est entouré une barrière thermique 3. « Entouré » implique que le volume intérieur 1 est bordé par la barrière 3, directement ou indirectement (par exemple avec interposition de parois, y compris une paroi thermique isolante, telle celle 5a ou 5b - voir ci-après), sur une partie au moins de sa périphérie, par exemple sur une face au moins.

On vise à maintenir la température du, ou dans le, bloc 1 dans une plage prédéterminée alors que la barrière 3 est placée dans un environnement extérieur 4 soumis à une température non constante, tel typiquement qu'un air ambiant entre -20/-30°C et 50°C.

A cette fin, la barrière thermique 3 comprend au moins, de l'intérieur (INT) vers l'extérieur (EXT) :
- au moins un premier élément 3a contenant au moins un matériau MCP et ayant une première température de changement de phase ou d'état (physique),
- au moins un second élément 3b contenant aussi un matériau MCP stockant et ayant une seconde température de changement d'état, la seconde température de changement d'état étant supérieure à la première,
- au moins un troisième élément isolant thermique, deux dans l'exemple : 5a,5b, disposé entre lesdits premier et second éléments 3a,3b et/ou à l'extérieur dudit second élément 3b.

Les éléments 3a,3b contiendront (au moins) un matériau MCP dans le sens où ils seront réalisés exclusivement ou non avec matériau (purs) ou plus probablement avec (au moins) un matériau MCP placé dans une matrice, avec des charges.

En tant que constitution de l'un ou l'autre de ces éléments 3a,3b, on pourra prévoir une composition de caoutchouc telle que décrite dans EP2690137 ou dans EP2690141, à savoir dans le second cas une composition réticulée à base d'au moins un élastomère silicone « RTV » vulcanisé à température ambiante et comprenant au moins un matériau MCP, ledit au moins un élastomère silicone présentant une viscosité mesurée à 23°C selon la norme ISO 3219 qui est inférieure ou égale à 5000 mPa.s. Dans ce cas, la matrice élastomère sera majoritairement constituée (i.e. selon une quantité supérieure à 50 pce, de préférence supérieure à 75 pce) d'un ou de plusieurs élastomères silicones « RTV ». Le matériau MCP thermique pourra être constitué de n-hexadécane, d'eicosane ou d'un sel de calcium, tous présentant des points de fusion inférieurs à 40° C.

L'autre élément 3b ou 3a pourra être à base de paraffine, d'acide gras eutectique (myristique-caprique) ou de sel hydraté eutectique (chlorure de calcium + potassium). D'autres possibilités existent, comme un MCP imprégné dans un réseau poreux.

Supposons des conditions opérationnelles où le bloc 1 est un volume renfermant, comme schématisé figure 2, des cellules 2 productrices d'électricité d'une batterie où on souhaite idéalement maintenir la température, TB, entre 25°C et 35°C. EB sera l'état de fonctionnement de la batterie : OFF (en fonctionnement) ou ON (à l'arrêt). La barrière 3 sera alors favorablement associée avec la paroi 6 d'un boitier, ou enveloppe, 8 dans lequel pourront être enfermées les cellules 2, réunies ou non en pack. En pratique, et en particulier si une constitution en poches 13 est retenue (voir ci-après), la barrière 3 pourra venir doubler la paroi 6 (plastique, composite, voire métallique) ou être intégrée à elle (par exemple par moulage).

Supposons aussi que des moyens de conduction et de convection (tels des ailettes métalliques définissant entre elles des canaux de circulation d'air) soient favorablement présents pour chercher à maintenir cette gamme de température interne, si la température du milieu extérieur évolue elle aussi entre 25°C et 35°C, et tant que la batterie fonctionne (moteur équipé de cette batterie non à l'arrêt), étant toutefois précisé que l'efficacité de la barrière 3 est effective que de tels moyens soient prévus ou non.

Dès lors qu'en réalité la température TA du milieu extérieur peut varier entre -20°C et 45°C, plusieurs situations perturbatrices pourront se présenter, rompant l'équilibre thermique intérieur/extérieur, ceci notamment quand lesdits moyens de convection vont s'arrêter (typiquement à l'arrêt du moteur). Ainsi :
- si milieu extérieur 4 présente une température supérieure à 35°C (temps chaud par exemple), alors il va commencer à y avoir une augmentation de la température interne, dans le bloc 1,
- si le milieu extérieur 4 présente une température inférieure à 25°C, alors il va au contraire commencer à y avoir une diminution de ladite température interne.

Pour limiter ces flux de chaleur entrant ou sortant (flèches 7a,7b figure 1), on a donc d'abord mis en place une, ici plusieurs, épaisseur d'isolant ou super-isolant thermique 5a,5b. Une couche 5a thermiquement isolante est ainsi placée autour du second élément 3b à matériau MCP. Et une couche thermiquement isolante 5b est placée entre les premier et second élément à matériau MCP 3a,3b. La couche 5a pourrait aussi être du côté intérieur du premier élément intérieur de barrière thermique (contre la couche 3a8 figure 1).

Quoi qu'il en soit, sans les couches MCP, respectivement chaude 3b et froide 3a, qui stockeront de l'énergie en fondant (liquéfaction) et la restitueront en cristallisant, l'action de l'isolant thermique demeurera insuffisante.

De là l'intérêt d'une, et préférence plusieurs couches 3a à base de « MCP froid » avec dans l'exemple une ou plusieurs températures Tc de cristallisation <= 25°C et d'une, et préférence plusieurs couches 3b à base de « MCP chaud », avec dans l'exemple une ou plusieurs températures Tf de fusion >=35°C.

Leur fonction principale commune est de participer au maintien en permanence d'une température du bloc 1 dans la gamme souhaitée : ici température de la batterie entre 25 et 35°C.

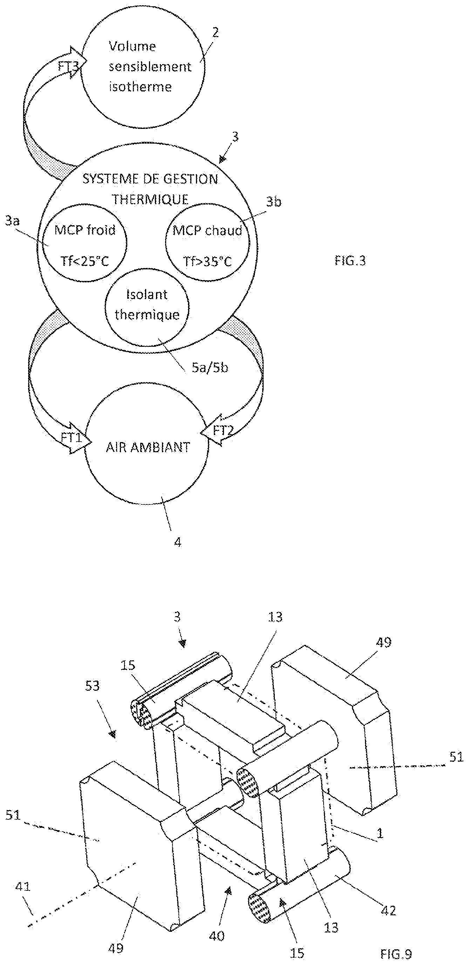

Les fonctions techniques opérationnelles sont les suivantes (voir schéma figure 3) :
- FT1 : contrôler l'action du froid ambiant (pour TA =<25°C) et ralentir la propagation du froid vers le volume intérieur,
- FT2 : contrôler l'action de la chaleur ambiante (pour TA >= 35°C) et ralentir la propagation de la chaleur vers le volume intérieur,
- FT3 : limiter le transfert de chaleur de l'intérieur vers l'extérieur (pour TB =<35°C dans le cas d'une batterie).

Une contrainte imposée est que cette solution soit légère, peu encombrante et fonctionne sans apport d'énergie extérieure à la batterie ni de prélèvement d'énergie électrique produite par la batterie. La barrière 3 sera alors considérée comme étant à fonctionnement autonome.

Leurs évolutions sont les suivantes :
- a) la/les « MCP froid » : les MCP fondent ou cristallisent chacun à leur température de changement d'état, avec des températures de fusion toutes < 25°C :
   -- ainsi, ces couches 3b absorbent et stockent l'énergie dite froide (en cédant de la chaleur de cristallisation) lorsqu'elles cristallisent, en retardant ainsi la propagation du froid de l'environnement 4 vers la batterie,
   -- et libèrent l'énergie froide stockée (ou absorbent et stockent de la chaleur par liquéfaction) lorsque les MCP fondent.

Supposons qu'après une phase de fonctionnement survienne un arrêt de fonctionnement de la batterie (EB devient OFF). Les couches de « MCP froid » ont fondu, elles sont liquides. La température interne dans le bloc 1 est alors supérieure à 25°C. Pendant les heures qui vont suivre, le soir arrivant par exemple, la barrière 1 va descendre en température du fait des températures extérieures TA basses qui peuvent par exemple être comprises entre -2°C et 10°C. L'objectif des couches 3a à base de MCP froid est alors de retarder cette baisse de température interne en stockant de l'énergie de cristallisation. L'ensemble des couches 3a MCP froid associées à l'isolant 5a et/ou 5b doit permettre de limiter la baisse de température du volume 1.

Lorsque la batterie va re-fonctionner (EB devient ON), rapidement TB >= 25°C. La/les couches 3a à base de MCP froid vont alors se liquéfier, empêchant (limitant) que la chaleur de la batterie parte vers l'extérieur, en perte tant que TB n'est pas excessive. En outre, cette production de chaleur et sa dissipation dans la barrière vont alors servir à régénérer les MCP froid qui auront cristallisés pendant la phase d'arrêt ;
- b) la/les « MCP chaud » : les MCP fondent ou cristallisent chacun à leur température de changement d'état, avec des températures de fusion toutes >= 35°C :
   -- ainsi, ces couches 3a absorbent l'énergie thermique lorsqu'elles fondent, en retardant ainsi la propagation de l'énergie chaude de l'environnement 4 vers la batterie (bloc 1),
   -- et libèrent l'énergie chaude qu'elles ont stockée, lorsque leurs MCP ont cristallisés pour T< 35°C.

Supposons qu'il fasse chaud extérieurement : température ambiante TA = 38°C. Les couches 3b à base de « MCP chaud » se liquéfient, retardant ainsi la propagation de chaleur vers la batterie, en absorbant l'énergie chaude. Ceci participe au maintien de la batterie dans sa gamme de températures opérationnelles favorables (25°C à 35°C).

En soirée, ou plus tard, si TA<=35°C, cette/ces couches à base de « MCP chaud » va/vont recristalliser, par convection naturelle au moins.

Si ensuite EB (re)devient ON (la batterie produit de nouveau de l'électricité), par exemple au matin suivant, quand le véhicule va être remis en marche, et que TB >= 35°C (pas de dits moyens de conduction et de convection, ou problème de réponse immédiate) les couches cristallisées 3a vont pouvoir absorber une partie de la chaleur produite par la batterie, favorisant ainsi son fonctionnement.

Ce qui précède confirme d'abord l'intérêt :
- à ce que les deux couches 3a et 3b présentent au moins deux compositions à base de matériau(x) MCP ayant individuellement des températures de changement d'état différentes entre elles : respectivement 25°C et 35°C, dans l'exemple,
- et même donc favorablement que l'un au moins des premier et second éléments 3a,3b comprenne plusieurs couches de matériaux contenant chacune un matériau MCP « MCP froid » et « MCP chaud », avec respectivement les couches telles 3b1,3b2 et 3a1 ...3a8.

Dans ce dernier cas, l'avantage de prévoir des températures de changement d'état qui croitront de la première couche la plus intérieure à la dernière couche la plus extérieure sera d'échelonner les effets de barrières thermiques attendus.

Ainsi, on pourra prévoir :
- au moins deux couches 3b1,3b2, avec donc deux températures de changement d'état, par exemple une, de fusion, plus basse Tf1 =35°C pour la couche la plus intérieure 3b2 et une autre, plus haute Tf2 =40°C pour la couche la plus extérieure 3b1 ;
- plus de deux couches, par exemple huit couches, 3a1...3a4,... 3a8, avec donc autant de températures de changement d'état, s'échelonnant par exemple par tranche de 5°C, entre 20°C (couche 3a1 la plus extérieure) et - 15°C (couche 3a8 la plus intérieure).

Un intérêt de la couche 5b thermiquement isolante intercalée entre les couches 3a et 3b est de limiter les transferts thermiques entre les couches « MCP froid » et « MCP chaud », en laissant chacune agir le plus pleinement possible, y compris quant à l'effet lissant. Un propos comparable peut s'appliquer à la couche 5a, ici la plus extérieure de la barrière 3, qui forme le premier (sens 7a) ou dernier (sens 7b) obstacle isolant. Quant à ladite répartition en (sous)couches multiples des matériaux MCP, elle sera, industriellement, probablement remplacée par l'emploi de plusieurs matériaux MCP ayant des températures de changement d'état différentes et qui seront dispersés dans une matrice (voir solution figure 14)

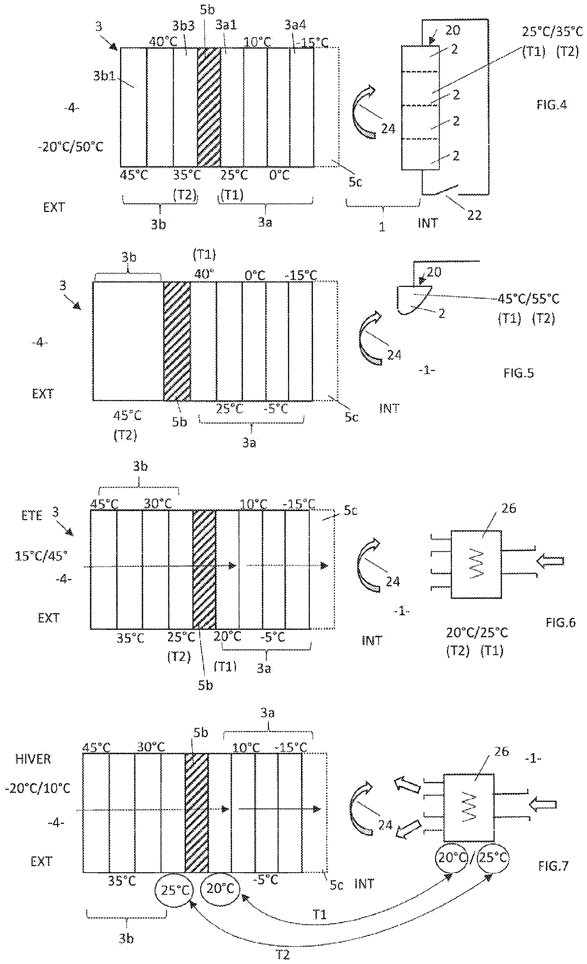

La figure 4 schématise le mode opératoire précité, dans le cas typique où la barrière 3 entoure, de préférence de tous côtés, le volume intérieur 1 dans lequel est disposé un pack 20 de cellules 2 prismatiques de batterie.

Des exemples de températures de changement d'états entre solide et liquide des MCP présents dans chaque couche (ou dispersés ; voir ci-après) des premier et second éléments à matériau MCP 3a,3b sont indiquées.

Comme indiqué sur la figure, ces températures de changement d'états vont globalement croissantes de l'intérieur (INT) vers l'extérieur (EXT). Une concordance entre les températures T1 d'une part et T2 d'autre part, avec T2 supérieure à T1 est à noter, sur la base des explications qui suivent.

Dans ce cas de cellules 2 prismatiques, la plage prédéterminée de températures à y maintenir, en fonctionnement, quand l'interrupteur 22 du circuit qui commande le fonctionnement et l'arrêt de la batterie est fermé, est entre 25 et 35°C (dans l'optimum ; on pourrait l'élargir de 5°C).

Pour assurer ce maintien, il faut faire barrière à un froid ou une chaleur excédant ces bornes et venant de l'extérieur 4 (EXT).

Supposons initialement tous les MCP « rechargés » c'est-à-dire état solide pour les MCP chauds et liquide pour les MCP froids.

S'il fait trop chaud, par exemple 38°C, les MCP alors liquéfiés des couches marquées 45°C et 40°C, ont retardé le flux de chaleur entrant de l'extérieur vers l'intérieur.

Si par exemple la nuit, la température extérieure descend à 10°C, c'est alors les MCP froids qui vont cristalliser, retardant ou freinant ainsi la baisse de température du bloc batterie.

Parallèlement, les MCP « chauds » du second élément à matériau MCP 3b vont alors tous se « recharger », en cristallisant, si l'on a pris soin que la température de changement d'état T2 du matériau MCP de la couche 3b3 au contact extérieur de l'isolant intermédiaire 5b soit égale (à 10% près) à la température maximum (T2) de la plage à maintenir (ici 35°C), les températures de changement d'état de tous les autres MCP du second élément 3b étant supérieures à T2. La température de changement d'état la plus élevée de ces MCP (ici 45°C ; couche la plus extérieure 3b1) est inférieure (ou égale) à la température extérieure maximale supposée, ici 50°C.

En face interne, le dernier MCP, ici de la couche 3a4, va par ailleurs pouvoir se « recharger », de même que tous les autres MCP du premier élément 3a, en se liquéfiant :
- si l'on a pris soin que la température de changement d'état T1 du matériau MCP de la couche 3a1 au contact intérieur de l'isolant intermédiaire 5b soit égale (à 10% près) à la température minimum (T1) de la plage à maintenir (ici 35°C), les températures de changement d'état de tous les autres MCP du premier élément 3a étant inférieures à T1,
- et si, à un moment donné, on a placé les MCP du premier élément 3a en échange thermique avec le flux thermique 24, ici chaud, généré dans le volume 1 par la batterie en fonctionnement.

Ainsi, pour qu'après une période froide (température extérieure inférieure à 25°C dans ce cas) où ils ont (au moins) retardé la propagation de ce froid vers la batterie 20, les MCP du premier élément barrière se liquéfient de nouveau, on va laisser la chaleur dégagée par la batterie qui fonctionne atteindre la température T1, ou entre T1 et T2.

Typiquement, après le temps opérationnel de fonctionnement, de la batterie, interrompu ici par l'ouverture de l'interrupteur 22, le flux 24 aura fait se (re)liquéfier les MCP du premier élément 3a.

Et ceci peut se produire, même si on double la face interne du premier élément 3a par une couche optionnelle supplémentaire thermiquement isolante 5c.

Les figures 5-7 ont été élaborées sur le même principe explicatif et de fonctionnement que la figure 4. Ce qui précède leur est donc applicable, aux valeurs de températures près et aux applications près :
- la figure 5 s'applique au cas d'une batterie nouvelle génération fonctionnant à l'optimum entre 45 et 55°C,
- les figures 6,7 s'appliquent au cas d'un habitacle 1 dont la température est à maintenir l'été (figure 6) et l'hiver (figure 7) entre environ 20 et 25°C dans l'exemple.

Dans tous les cas, on retrouve les particularités des températures T1 et T2 (voir figure 6 en particulier).

Dans le cas de la batterie nouvelle génération fonctionnant à l'optimum entre 45 et 55°C, le second élément 3b pourra ne comprendre qu'un seul matériau MCP, par exemple à température de changement de phase de 45°C (cristallisé en-dessous), puisque la température extérieure maximum ici définie est de 55°C et celle T2 est égale à 50°C.

Il y a donc des cas où au moins l'un des éléments barrières 3a,3b peut être monocouche et/ou mono MCP.

Figures 6, 7, les flèches à travers les éléments 3a,5b,3a indiquent, face à un flux allant de l'extérieur vers l'intérieur, les effets de barrière thermique aux températures extérieures indiquées (traits pleins), mais aussi les parties alors inopérantes (pointillés), du fait de ces mêmes températures.

Une mise en fonctionnement, par exemple un matin froid comme dans le cas de la figure 7, du dispositif 26 interne de chauffage de l'habitacle (volume 1), par exemple à 20°C, permettra de nouveau à un flux chaud 24, ici d'air, de faire se recharger, en se liquéfiant, les MCP « froids » du premier élément 3a intérieur de barrière thermique. Par exemple un interrupteur marche/arrêt et/ou des moyens de réglage de la température attendue en sortie du dispositif 26 de chauffage lui sont intégrés pour ne rendre le flux thermique 24 que temporaire.

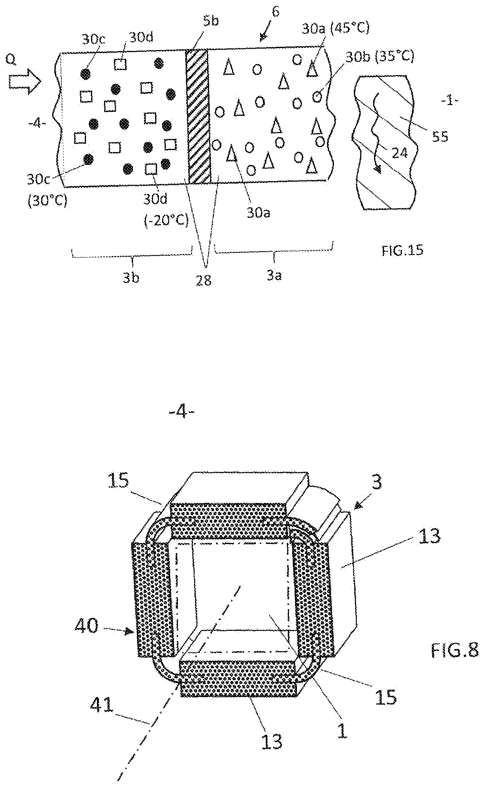

Figure 15 maintenant, on a schématisé l'utilisation de la paroi 6, pourvue des premier et second éléments 3a,3b de barrière thermique, en tant que bouclier protecteur local, autour d'un élément de moteur, tel qu'une culasse.

Chacun des éléments 3a,3b contient plusieurs matériaux MCP dans l'exemple. Et, comme dans d'autres cas ici présentés, le volume intérieur 1 pourra être celui d'un élément distinct, séparé de la paroi 6, comme ici l'élément de moteur concerné. Ainsi, une paroi thermiquement conductrice 55, comme celle métallique de cet élément de moteur, pourrait être interposée entre l'élément intérieur 3a de la paroi 6 et le volume 1. De façon générale, l'échange thermique pourrait donc être indirect entre l'élément intérieur 3a de la paroi 6 et le volume 1.

Il se pourra alors que cette paroi 55 de l'élément de moteur définisse le moyen d'apport temporaire d'énergie thermique favorisant la liquéfaction des matériaux MCP du premier élément 3a, par échange thermique avec eux. On peut en effet considérer que, lorsque le moteur fonctionne, cette énergie puisse être apportée vers 55-60°C dans ce volume (voire notablement plus), donc à une température supérieure tant aux températures de changement d'état des MCP 30a,30b (supposés être respectivement à 35°C et 45°C) qu'à celle à maintenir dans le volume 1 (vers 50°C) quand le moteur est arrêté et que dans les 30-60mns qui suivent, on veut le faire redémarrer avec le meilleur rendement alors qu'un froid hivernal (0°C) est installé à l'extérieur.

Dans le cas particulier du bouclier précité, l'élément extérieur 3b visera typiquement à protéger contre le froid, l'élément intérieur 3a assurant un rôle d'accélérateur de montée en températures dans le volume 1 et la paroi 55, dans le cas ci-dessus d'un redémarrage moteur après un arrêt de 60mns ou moins.

On peut dès lors favorablement choisir des températures de changement d'états entre -20°C et 30°C dans l'élément extérieur 3b et entre (30 ou 35°C) et 45°C dans l'élément intérieur 3a, avec l'isolant thermique 5b interposé entre eux.

Supposons que le moteur fonctionne depuis plusieurs heures. Il est chaud. Tant que la température dans la paroi 55 reste vers 95°C, température nominale de fonctionnement supposée, les matériaux MCP de l'élément intérieur 3a sont liquides. Ceux de l'élément extérieur 3b sont aussi liquides, du fait de l'apport de l'énergie Q amené à plus de 40°C dans l'environnement extérieur 4 par le fonctionnement du moteur.

Quand le moteur est arrêté et que le véhicule est parqué à 0°C dans l'exemple, certains (l'un dans l'exemple) des matériaux MCP de la barrière 3b passent solides. Ceci freine ou retarde le refroidissement intérieur de la paroi 6. Idem dans l'élément intérieur 3a : les MCP ont cristallisé, libérant leur énergie chaude, et ayant ainsi ralenti les refroidissements dans 1 et 55.

Quand le moteur, qui a refroidi, redémarre, dès que la température de la paroi 55 atteint puis dépasse 35°C puis 45°C, les MCP de l'élément intérieur 3a se liquéfient de nouveau. La paroi 55 reste vers 90-120°C, gamme des températures nominales supposées.

Encore une autre application possible de la barrière thermique 3 peut se trouver dans la réalisation d'un manchon 40 du type schématisé figures 8 et 9 exposé, autour de lui, à un environnement 4 à température variable et entourant un bloc central 1, transversalement à un axe de référence 41.

Le bloc central peut par exemple être un conteneur à médicaments à conserver à basse température, par exemple entre 1 et 5°C, ou être défini directement par le volume interne de ce conteneur dont tout ou partie des parois intégreraient dans leur épaisseur la barrière 3. Une autre hypothèse serait le maintien au chaud, par exemple entre 25 et 45°C, d'aliments dans un caisson dont tout ou partie des parois intégreraient de nouveau dans leur épaisseur ladite barrière 3. Un maintien isotherme du bloc 1 via un boîtier calorifugé à barrière thermique 3 peut donc être visé.

De fait, on définira dans la barrière 3 la position relative (plus à l'intérieur ou plus à l'extérieur) des MCP chaud et froid 3a,3b et l'emplacement du/des couches thermiquement isolantes telles 5a,5b, en fonction du sens du gradient thermique entre l'intérieur 1 et l'extérieur 4.

Les deux manchons 40 schématisés figures 8,9 sont formés à partir d'une bande de panneaux articulables à isolation thermique continue, représentée dans un état opérationnel, fermée sur elle-même.

Chacun comprend une série de poches barrière 13 réunies deux à deux par des portions intermédiaires flexibles (ou conformables) 15 où deux poches successives peuvent s'articuler l'une par rapport à l'autre.

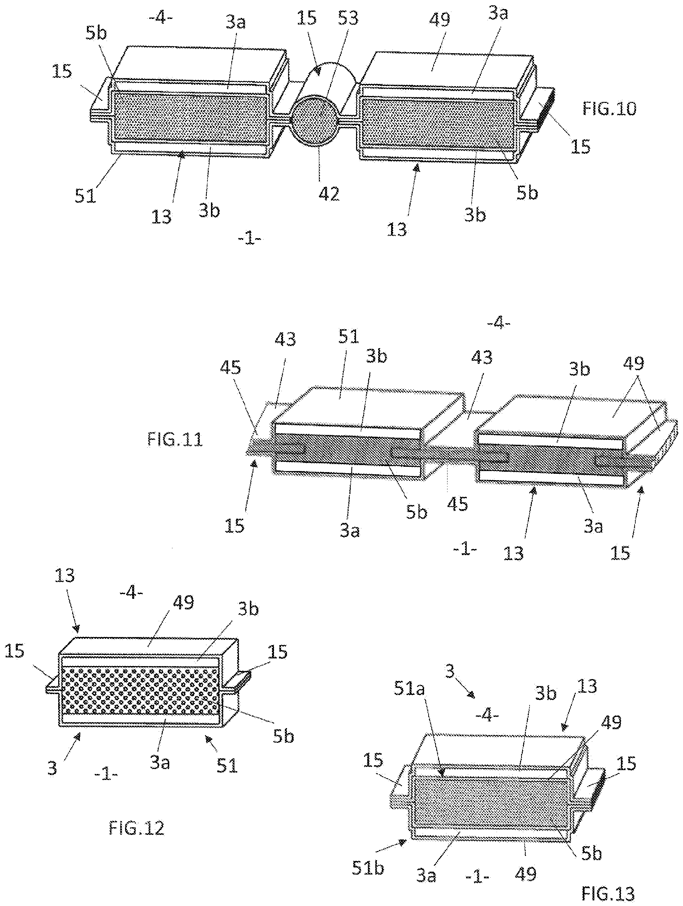

Dans l'un des cas (figures 9,10), on trouve, entre deux telles zones d'articulation, une portion renflée 42 thermiquement isolante (au moins).

Dans l'autre cas (figures 8,11), lesdites portions intermédiaires sont entièrement définies par une structure 43 à matériau(x) au moins isolant thermique 45 (de préférence poreux pour être intégré à une structure PIV globale), assurant une continuité d'isolation thermique entre deux poches 13 successives. Le matériau 45 pourra être identique au(x) matériau(x) isolant(s) thermique(s) poreux des couches 5a et/ou 5b.

A l'image de l'enveloppe périphérique qui maintiendra et réunira les différentes couches précitées de la barrière 3, ces couches de matériaux thermiquement isolants et à base de MCP chaud et froid (tels que dans l'exemple des figures 10-13 les couches 3a,5b,3b) sont totalement enfermées dans une ou plusieurs feuilles conformables 49 d'une enveloppe unique (figures 10-12) ou double (figure 13). Les feuilles 49, métalliques ou plastiques, sont scellées ensemble (par exemple soudées) sur toute la périphérie desdites couches de matériaux, pour l'étanchéité et la constitution PIV a priori souhaitée de l'enveloppe 51. La(les) feuille(s) de quelques dixièmes de mm à quelques mm d'épaisseur envelopperont, de préférence d'un seul tenant, les poches 13 et les portions de liaison 15. Une solution pourra donc être, pour l'enveloppe 51, de réaliser au moins une première enveloppe intérieure 51a étanche renfermant (chacune) une couche thermiquement isolante (5a,5b), le tout étant, avec les couches (3a,3b) à base de MCP, contenu dans une seconde enveloppe extérieure 51b non nécessairement étanche (figure 13).

Dans l'exemple de la figure 11, le matériau poreux (ici en forme de plaque) de chaque structure flexible 43 s'interrompt dans le matériau isolant thermique poreux 5b qui remplit les poches 13. Il pourrait toutefois y avoir continuité.

Pour réaliser les portions intermédiaires à matériau 45, on pourra en particulier utiliser une matrice flexible en maillage polymère de quelques mm d'épaisseur imprégné d'un aérogel organique, par exemple de silice, ou son pyrolisat (aérogel pyrolysé, étant précisé que cette alternative de pyrolisat s'applique à chaque cas de la présente description où un matériau poreux thermiquement isolant est concerné).

Dans l'exemple des figures 10-13, les portions d'articulation 15 sont chacune définies par les feuilles 49 accolées par exemple par le vide interne créé. Les portions renflées 42 (figure 10) renferment au moins une couche thermiquement isolante 53, voire aussi au moins une couche MCP.

Plus épaisses que les tissus imprégnés de la figure 11, par exemple plus de 2.5 à 3 fois plus épaisses, comme schématisé, les poches 13 seront typiquement plus rigides que les structures d'articulation 15.

Typiquement, une poche 13 avec pour matériaux cœur des aérogels nano-poreux ou leur pyrolisat et donc des MCP chaud et froid pourra présenter une conductivité thermique inférieure à 100mW.m-1.K-1 à 20°C pour une pression interne de 2 à 5 à 10⁻³ Pa. La dépression dans les poches, voire les portions 21, pourra être celle habituelle des PIV : 10⁻² à 10⁻³ Pa.

Pour maintenir fermée sur elle-même chaque bande formant la manchon 40, on peut prévoir un système d'attache aux deux extrémités opposées de la bande, avec une liaison amovible type velcro ®, par exemple.

A l'endroit de ses extrémités ouvertes, chaque manchon recevra favorablement, comme schématisé figure 6, des couvercles 490 pourvus d'au moins un isolant thermique 51, voire eux aussi chacun d'une barrière 3.

Un boîtier 53 formant une barrière à système de gestion thermique autonome pourra ainsi être établi autour d'un bloc 1 dont la température est à gérer. Et l'utilisation de panneaux PIV à complexe isolants poreux/MCP chaud et froid devrait permettre d'atteindre une résistance thermique R = 5 m².K/W avec seulement 35 mm d'isolant.

Le(s) MCP chauds sont intéressants dans ce cas en particulier dans la phase d'arrêt du moteur. Lorsque le système descend en température du fait des conditions extérieures de température plus basses que la température du volume 1, un palier de température est marqué à la température de changement du(de chaque) MCP présent. Cci permet de retarder le transfert du flux thermique par comparaison avec une solution sans MCP. Au redémarrage moteur, Le(s) MCP chauds participent à une remontée plus rapide en température du bloc moteur, mais dans une moindre mesure.

Comme expliqué ci-avant, les MCP chauds et/ou froids seront de préférence respectivement dispersés, pour les premiers d'un côté, pour les seconds de l'autre de la couche intermédiaire thermiquement isolante 5b, dans une matrice 28, typiquement un composite thermoplastique ou une matrice élastomère.

Ci-après, on fournit un exemple d'éléments à MCP chauds et à MCP froids, respectivement, pour une batterie fonctionnant favorablement entre 25°C et 35°C.

Il pourra en particulier s'agir de MCP encapsulés disposés, typiquement dispersés, dans une matrice ou support, qui pourra être un élastomère, un silicone, ou dérivés, EPDM (éthylène-propylène-diène monomère) ou HNBR (copolymères butadiène-acrylonitrile hydrogénés, aussi appelés « caoutchoucs nitrile hydrogénés ») ou NBR (copolymères butadiène-acrylonitrile, aussi appelés « caoutchoucs nitrile »). EP2690137 et EP2690141 donnent des exemples.

On notera quoi qu'il en soit que tout MCP peut avoir un changement de phase ou d'état à un pic de température prédéterminé ou qui s'établit sur une plage de températures plus ou moins large. Ainsi, avec un MCP pur (tel qu'une paraffine) la température de changement d'état sera constante, tandis qu'elle pourra être non constante avec plusieurs MCP, tels que pour un mélange de paraffines.

De façon générale, les deux cas pouvant être rencontrés dans la présente demande en liaison avec le(s) MCP prévus, toute température de changement d'état de MCP sera ici à considérer dans une plage de 10°C, et typiquement à +/- 5°C.

## Revendications

1. Ensemble comprenant
au moins un volume (1) entouré par une paroi (6) pourvue d'une barrière thermique (3) qui entoure ledit volume (1), la barrière thermique (3) étant adaptée à favoriser, dans ledit volume (1), un maintien d'une température dans une plage prédéterminée alors que la barrière est placée dans un environnement extérieur (4) soumis à une température non constante, la barrière comprenant, de l'intérieur, où est situé ledit volume (1), vers l'extérieur où se situe ledit environnement extérieur (4):
-- un premier élément (3a) contenant au moins un matériau à changement de phases stockant ou cédant de l'énergie thermique par changement d'état et ayant une première température de changement d'état (Tf), puis,
-- un second élément (3b) contenant au moins un matériau à changement de phases stockant ou cédant de l'énergie thermique par changement d'état et ayant une seconde température de changement d'état (Tc), la seconde température de changement d'état étant différente de la première,
l'ensemble étant **caractérisé en ce qu'**il comprend en outre :
- un troisième élément, isolant thermique, (5a,5b) disposé entre les premier et second éléments contenant un matériau à changement de phases, ou à l'extérieur dudit second élément (3b), et
- des moyens (20,22;24;26) d'apport temporaire dans le ledit volume intérieur (1) d'une énergie thermique, en échange thermique avec ledit premier élément (3a) contenant au moins un matériau à changement de phases, pour favoriser alors un changement de phases dudit matériau à changement de phases du premier élément (3a).

2. Ensemble selon la revendication 1, où le ledit volume intérieur renferme, en tant que dits moyens (20,22;24;26) d'apport temporaire d'énergie thermique, des cellules (2) de batterie électrique productrices de chaleur disposés dans ledit volume et dont la température est à réguler.

3. Ensemble selon la revendication 1, où le ledit volume intérieur (1) renferme, en tant que dits moyens (20,22;24;26) d'apport temporaire d'énergie thermique, un dispositif (26) interne de chauffage de l'habitacle.

4. Ensemble selon la revendication 1, comprenant une enveloppe extérieure (8) qui est pourvue de la barrière thermique (3) et, en tant que dits moyens (20,22;24;26) d'apport temporaire d'énergie thermique, au moins une cellule (2) de batterie électrique disposée dans ledit volume.

5. Ensemble selon l'une des revendications 1 à 4 où la barrière thermique (3) est destinée à être placée dans un dit environnement extérieur (4), tel que l'environnement d'un moteur thermique :
- périodiquement plus chaud que la ou les températures de changement d'état, entre solide et liquide, du ou des matériaux à changement de phases du second élément (3b),
- et avec lequel ce ou ces matériaux à changement de phases dudit second élément (3b) sont placés en échange thermique,
pour favoriser alors une liquéfaction de ce ou ces matériaux à changement de phases dudit second élément (3b).

6. Ensemble selon l'une des revendications 1 à 5, où les moyens (20,22;24;26) d'apport temporaire d'énergie thermique et ledit volume intérieur (2) communiquent de telle sorte que ladite énergie soit apportée dans ce volume à une température supérieure ou égale à la (aux) température(s) de changement d'état, entre solide et liquide, du ou des matériaux à changement de phases du premier élément (3a), en échange thermique avec ce ou ces matériaux à changement de phases, pour favoriser alors leur liquéfaction.

7. Ensemble selon l'une des revendications 1 à 6, où l'un au moins des premier et second éléments (3a,3b) comprend plusieurs matériaux à changement de phases ayant des températures de changement d'état différentes les unes des autres et qui sont dispersés dans une matrice (28) ou disposés dans plusieurs couches de matériaux contenant chacune un dit matériau à changement de phases.

8. Ensemble selon l'une des revendications précédentes, dans lequel l'un au moins des premier élément (3a) et second élément (3b) de barrière thermique contient plusieurs matériaux à changement de phases stockant ou cédant de l'énergie thermique par changement de phases, entre liquide et solide, et ayant des températures de changement d'état différentes.

9. Ensemble selon l'une des revendications précédentes, où la ou les températures de changement d'état du ou des matériaux à changement de phases du premier élément (3a) est(sont) inférieure(s) à la, ou aux, température(s) de changement d'état du ou des matériaux à changement de phases du second élément (3b) de barrière thermique, de telle sorte :
- qu'à certaines températures, des flux thermiques venant de l'extérieur et atteignant l'un et/ou l'autre desdits éléments sont freinés dans leur progression de l'extérieur vers l'intérieur, par changement d'état du(des) matériaux à changement de phases dans le(s)dit(s) élément(s) atteint(s), ou,
- que soit freiné, par changement d'état, un transfert thermique de l'intérieur vers l'extérieur issu de l'apport dans ledit volume (1) d'un fluide à au moins une température supérieure ou égale à celle(s) de changement d'état du ou des matériaux à changement de phases dudit premier élément (3a), favorisant ainsi une montée en température dans ledit volume (1).

10. Ensemble selon la revendication 9, où le troisième élément, isolant thermique, (5b) est disposé entre les premier et second éléments respectivement intérieur et extérieur de barrière thermique (3a,3b),

11. Ensemble selon l'une des revendications précédentes, où la ou certaines au moins des températures de changement d'état du ou des matériaux à changement de phases du premier élément (3a) est(sont) inférieure(s) aux températures de ladite plage prédéterminée de température à maintenir.

12. Ensemble selon l'une des revendications 1 à 10, où la température de changement d'état la plus haute (T1) dans ledit premier élément (3a) est égale, à moins de 5°C près environ, à la température la plus basse de ladite plage prédéterminée de température à maintenir, et/ou la température de changement d'état la plus basse (T2) dans ledit second élément (3b) est égale, à moins de 5°C près environ, à la température la plus haute de ladite plage prédéterminée de température à maintenir.

13. Ensemble selon l'une des revendications 1 à 8, où :
- la ou les températures de changement d'état du ou des matériaux à changement de phases du premier élément (3a) est(sont) supérieure(s) à la, ou aux, température(s) de changement d'état du ou des matériaux à changement de phases du second élément (3b), pour freiner, par changement d'état, un transfert thermique de l'intérieur vers l'extérieur issu de l'apport dans le volume intérieur d'un fluide à au moins une température supérieure ou égale à celle(s) de changement d'état du ou des matériaux à changement de phases dudit premier élément (3a), favorisant ainsi une montée en température dans le volume intérieur,
- et le troisième élément, isolant thermique, (5b) est disposé entre les premier et second éléments respectivement intérieur et extérieur de barrière thermique (3a,3b).

14. Procédé de gestion thermique, dans un ensemble selon l'une des revendications 1 à 13, d'un volume intérieur (1), **caractérisé en ce que** :
- on réalise ladite barrière thermique (3), avec des matériaux à changement de phases entre liquide et solide,
- on dispose ladite barrière thermique (3) autour dudit volume intérieur, de sorte que lesdits premier (3a) et/ou second (3b) éléments de barrière thermique (3a,3b) freine(nt), par changements d'états, un flux thermique venant de l'extérieur,
- et, une fois réalisé le changement d'états dudit au moins un matériau à changement de phases du premier élément (3a) de barrière thermique, on favorise un nouveau changement de son état par un apport temporaire d'énergie thermique issue desdits moyens (20,22;24;26) d'apport temporaire d'énergie thermique.

## Patentansprüche

1. Anordnung, enthaltend:
zumindest einen Raumbereich (1), der von einer Wand (6) umgeben ist, die mit einer den Raumbereich (1) umgebenden Wärmesperre (3) versehen ist,
wobei die Wärmesperre (3) so ausgelegt ist, dass sie in dem Raumbereich (1) die Aufrechterhaltung einer Temperatur innerhalb eines vorbestimmten Temperaturbereichs begünstigt, während die Wärmesperre in einer äußeren Umgebung (4) angeordnet ist, die einer nicht konstanten Temperatur ausgesetzt ist, wobei die Wärmesperre von der Innenseite, wo sich der Raumbereich (1) befindet, zur Außenseite hin, wo sich die äußere Umgebung (4) befindet, enthält:
-- ein erstes Element (3a), das zumindest ein Phasenwechselmaterial enthält, das durch Zustandsänderung Wärmeenergie speichert oder freisetzt und eine erste Zustandsänderungstemperatur (Tf) aufweist, und
-- ein zweites Element (3b), das zumindest ein Phasenwechselmaterial enthält, das durch Zustandsänderung Wärmeenergie speichert oder freisetzt und eine zweite Zustandsänderungstemperatur (Tc) aufweist, wobei sich die zweite Zustandsänderungstemperatur von der ersten unterscheidet,
wobei die Anordnung **dadurch gekennzeichnet ist, dass** sie ferner enthält:
- ein wärmeisolierendes drittes Element (5a, 5b), das zwischen dem ersten und dem zweiten Element, die ein Phasenwechselmaterial enthalten, oder außerhalb des zweiten Elements (3b) angeordnet ist, und
- Mittel (20, 22; 24, 26) zum vorübergehenden Wärmeenergieeintrag in den inneren Raumbereich (1) im Wärmeaustausch mit dem ersten Element (3a), das zumindest ein Phasenwechselmaterial enthält, um dann einen Phasenwechsel des Phasenwechselmaterials des ersten Elements (3a) zu begünstigen.

2. Anordnung nach Anspruch 1,
wobei der innere Raumbereich als Mittel (20, 22; 24; 26) zum vorübergehenden Wärmeenergieeintrag wärmeerzeugende elektrische Batteriezellen (2) umschließt, die in dem Raumbereich angeordnet sind und deren Temperatur geregelt werden soll.

3. Anordnung nach Anspruch 1,
wobei der innere Raumbereich (1) als Mittel (20, 22; 24; 26) zum vorübergehenden Wärmeenergieeintrag eine interne Heizvorrichtung (26) für den Fahrgastraum umschließt.

4. Anordnung nach Anspruch 1,
enthaltend eine äußere Hülle (8), die mit der Wärmesperre (3) versehen ist, und als Mittel (20, 22; 24; 26) zum vorübergehenden Wärmeenergieeintrag zumindest eine in diesem Raumbereich angeordnete elektrische Batteriezelle (2).

5. Anordnung nach einem der Ansprüche 1 bis 4,
wobei die Wärmesperre (3) dazu bestimmt ist, in einer äußeren Umgebung (4), wie etwa in der Umgebung einer Wärmekraftmaschine, angebracht zu werden, die
- periodisch heißer ist als die Temperatur(en) der Zustandsänderung zwischen fest und flüssig des Phasenwechselmaterials bzw. der Phasenwechselmaterialien des zweiten Elements (3b),
- und mit der dieses bzw. diese Phasenwechselmaterial(ien) des zweiten Elements (3b) im Wärmeaustausch angeordnet sind,
um dann eine Verflüssigung dieses bzw. dieser Phasenwechselmaterial(ien) des zweiten Elements zu begünstigen.

6. Anordnung nach einem der Ansprüche 1 bis 5,
wobei die Mittel (20, 22; 24; 26) zum vorübergehenden Wärmeenergieeintrag und der innere Raumbereich (2) kommunizieren, so dass die Energie in diesen Raumbereich bei einer Temperatur zugeführt wird, die größer oder gleich der bzw. den Temperatur(en) der Zustandsänderung zwischen fest und flüssig des bzw. der Phasenwechselmaterial(ien) des ersten Elements (3a) ist, im Wärmeaustausch mit diesem bzw. diesen Phasenwechselmaterial(ien), um dann deren Verflüssigung zu begünstigen.

7. Anordnung nach einem der Ansprüche 1 bis 6,
wobei zumindest eines aus erstem und zweitem Element (3a, 3b) mehrere Phasenwechselmaterialien mit voneinander verschiedenen Zustandsänderungstemperaturen enthält, die in einer Matrix (28) dispergiert oder in mehreren Materialschichten angeordnet sind, die jeweils ein solches Phasenwechselmaterial enthalten.

8. Anordnung nach einem der vorangehenden Ansprüche,
wobei zumindest eines aus erstem Element (3a) und zweitem Element (3b) der Wärmesperre mehrere Phasenwechselmaterialien enthält, die durch Phasenwechsel zwischen flüssig und fest Wärmeenergie speichern oder freisetzen und verschiedene Zustandsänderungstemperaturen haben.

9. Anordnung nach einem der vorangehenden Ansprüche,
wobei die Zustandsänderungstemperatur bzw. Zustandsänderungstemperaturen des bzw. der Phasenwechselmaterial(ien) des ersten Elements (3a) niedriger als die Zustandsänderungstemperatur bzw. Zustandsänderungstemperaturen des bzw. der Phasenwechselmaterial(ien) des zweiten Elements (3b) der Wärmesperre ist bzw. sind, so dass
- bei bestimmten Temperaturen Wärmeströme, die von außen zu dem einen und/oder anderen der Elemente gelangen, durch eine Zustandsänderung des bzw. der Phasenwechselmaterial(ien) in dem bzw. den betroffenen Element(en) in ihrem Fortschreiten von außen nach innen verlangsamt werden, oder
- dass ein Wärmeübergang von innen nach außen, der sich aus dem Einführen eines Fluids in den Raumbereich (1) bei zumindest einer Temperatur ergibt, die höher oder gleich derjenigen bzw. denjenigen der Zustandsänderung des bzw. der Phasenwechselmaterial(ien) des ersten Elements (3a) ist, durch eine Zustandsänderung verlangsamt wird, wodurch ein Temperaturanstieg in dem Raumbereich (1) begünstigt wird.

10. Anordnung nach Anspruch 9,
wobei das wärmeisolierende dritte Element (5b) zwischen dem ersten und dem zweiten inneren bzw. äußeren Wärmesperrelement (3a, 3b) angeordnet ist.

11. Anordnung nach einem der vorangehenden Ansprüche,
wobei die oder zumindest bestimmte der Zustandsänderungstemperatur(en) des bzw. der Phasenwechselmaterial(ien) des ersten Elements (3a) niedriger als die Temperaturen des vorbestimmten Temperaturbereichs, der aufrechterhalten werden soll, ist bzw. sind.

12. Anordnung nach einem der Ansprüche 1 bis 10,
wobei die höchste Zustandsänderungstemperatur (T1) in dem ersten Element (3a) auf etwa 5°C genau gleich der niedrigsten Temperatur in dem vorbestimmten Temperaturbereich, der aufrechterhalten werden soll, ist, und/oder die niedrigste Zustandsänderungstemperatur (T2) in dem zweiten Element (3b) auf etwa 5°C genau gleich der höchsten Temperatur in dem vorbestimmten Temperaturbereich, der aufrechterhalten werden soll, ist.

13. Anordnung nach einem der Ansprüche 1 bis 8,
wobei
- die Zustandsänderungstemperatur(en) des bzw. der Phasenwechselmaterial(ien) des ersten Elements (3a) höher als die Zustandsänderungstemperatur(en) des bzw. der Phasenwechselmaterial(ien) des zweiten Elements (3b) ist bzw. sind, um durch Zustandsänderung einen Wärmeübergang von innen nach außen, der sich aus dem Einführen eines Fluids in den inneren Raumbereich ergibt, bei zumindest einer Temperatur, die höher oder gleich der bzw. den Zustandsänderungstemperatur(en) des bzw. der Phasenwechselmaterial(ien) des ersten Elements (3a) ist bzw. sind, zu verlangsamen und dadurch einen Temperaturanstieg in dem inneren Raumbereich zu begünstigen,
- und das wärmeisolierende dritte Element (5b) zwischen dem ersten und dem zweiten inneren bzw. äußeren Wärmesperrelement (3a, 3b) angeordnet ist.

14. Verfahren zum Wärmemanagement eines inneren Raumbereichs (1) bei einer Anordnung nach einem der Ansprüche 1 bis 13, **dadurch gekennzeichnet, dass**
- die Wärmesperre (3) aus Materialien mit Phasenwechsel zwischen flüssig und fest hergestellt wird,
- die Wärmesperre (3) um den inneren Raumbereich herum angeordnet wird, so dass das erste (3a) und/oder das zweite (3b) der Wärmesperrelemente (3a, 3b) einen von außen kommenden Wärmestrom durch Zustandsänderungen verlangsamt bzw. verlangsamen,
- und dass sobald die Zustandsänderung des zumindest einen Phasenwechselmaterials des ersten Wärmesperrelements (3a) erreicht ist, eine weitere Zustandsänderung desselben durch einen vorübergehenden Wärmeenergieeintrag von den Mitteln (20, 22; 24; 26) zum vorübergehenden Wärmeenergieeintrag begünstigt wird.

## Claims

1. An assembly comprising at least one volume (1) surrounded by a wall (6) provided with a thermal barrier (3) which surrounds said volume (1), the thermal barrier (3) being suitable for helping to maintain, within said volume (1), a temperature within a predetermined range while the barrier is disposed in an external environment (4) subjected to a non-constant temperature, the barrier comprising the following from inside, where said volume (1) is located, toward outside where said external environment (4) is located:
-- a first element (3a) containing at least one phase change material that stores or releases thermal energy through a change of state and having a first state change temperature (Tf), then,
-- a second element (3b) containing at least one phase change material that stores or releases thermal energy through a change of state and having a second state change temperature (Tc), the second state change temperature being different from the first state change temperature,
the assembly being **characterized in that** it further comprises :
-- a third, thermally insulating, element (5a, 5b) disposed between said first and second elements containing a phase change material, or outside said second element (3b), and
- means (20, 22; 24; 26) for temporarily supplying in said internal volume (1) a thermal energy, in a heat exchange relationship with said first element (3a) containing at least one phase change material, to thus promote a phase change of said phase change material of the first element (3a).

2. The assembly according to claim 1, wherein said internal volume encloses, as of said means (20, 22, 24, 26) for temporarily supplying thermal energy, electric battery cells (2) producing heat disposed in said volume and whose temperature is to be regulated.

3. The assembly according to claim 1, wherein said internal volume (1) encloses, as of said means (20, 22, 24, 26) for temporarily supplying thermal energy, an internal passenger compartment heating device (26).

4. An assembly according to claim 1, comprising an outer enclosure (8) that is provided with the thermal barrier (3), and as of said means (20, 22; 24; 26) for temporarily supplying thermal energy, at least one electric battery cell (2) that is disposed in said volume.

5. The assembly according to claim 1 to 4, wherein in that the thermal barrier (3) is intended to be disposed in said external environment (4), such as the environment of a combustion engine:
- that is periodically hotter than the temperatures of the change of state, between solid and liquid, of the phase change material(s) of the second element (3b),
- and with which the phase change material(s) of said second element (3b) is(are) disposed in a heat exchange relationship,
to thus promote a liquefaction of the phase change material(s) of said second element (3b).

6. The assembly according to any of claims 1 to 5, wherein the means (20, 22; 24; 26) for temporarily supplying thermal energy and said internal volume (1) communicate in such a way that said energy is supplied into said volume at a temperature that is higher than or equal to the solid-to-liquid state change temperature(s) of phase change material(s) of said first element (3a), in a heat exchange relationship with the phase change material(s), to thus promote the liquefaction.

7. The assembly according to one of claims 1 to 6, wherein at least one of the first and second element s (3a, 3b) comprises several phase change materials having state change temperatures that are different one from another and that are dispersed in a matrix (28) or disposed in several layers of material each containing a said phase change material.

8. The assembly according to one of the preceding claims, wherein at least one of the first and second elements (3a, 3b) comprises several phase change materials that store or release thermal energy through a liquid-to-solid phase or solid-to-liquid phase change, and having different state change temperatures.

9. The assembly according to one of the preceding claims, wherein the state change temperature(s) of the phase change material(s) of the first element (3a) is(are) lower than the phase change temperature(s) of the phase change material(s) of the second thermal barrier element (3b), so that:
- at certain temperatures, heat fluxes coming from the outside and reaching one and/or the other of said elements are slowed down in their progression from the outside toward the inside, by the change of state of the phase change material(s) inside said element(s) reached, and/or,
- be slowed down, through a change of state, a heat transfer from the inside toward the outside resulting from the supply in the internal volume of a fluid at a temperature at least higher than or equal to the state change temperature(s) of the phase change material(s) of said first element (3a), thus promoting a temperature increase in said volume (1).

10. The assembly according to claim 9, wherein the third, thermally insulating, element (5b) is disposed between the first and second, respectively internal and external, thermal barrier elements (3a, 3b),

11. The assembly according to one of the preceding claims, wherein the or at least some of the state change temperature(s) of the phase change material(s) of the first element (3a) is(are) lower than the temperatures of said predetermined temperature range to be maintained.

12. The assembly according to one of claims 1 to 10, wherein the highest state change temperature (T1) in said first element (3a) is equal to, at least within about 5°C, the lowest temperature of said predetermined temperature range to be maintained, and/or the lowest state change temperature (T2) in said second element (3b) is equal to, within at least about 5°C, the highest temperature of said predetermined temperature range to be maintained.

13. The assembly according to one of claims 1 to 8, wherein:
- the state change temperature(s) of the change material(s) of the first element (3a) is(are) higher than the state change temperature(s) of the phase change material(s) of the second element (3b), to slow down, through a change of state, a heat transfer from the inside toward the outside resulting from supplying the internal volume of a fluid at a temperature at least higher than or equal to the temperature(s) of the state change of the phase change material(s) of said first element (3a), thus promoting a temperature increase within the internal volume,
- and the third, thermally insulating, element (5b) is disposed between the first and second elements, respectively internal and external, thermal barrier (3a, 3b).

14. A method for the thermal management of an internal volume (1), in an assembly according to one of claims 1 to 12, **characterized in that**:
- the thermal barrier (3) is realized, with phase change materials between liquid and solid phases,
- said thermal barrier (3) is disposed around said internal volume, so that said first (3a) and/or second (3b) thermal barrier elements (3a, 3b) slow down, through changes of state, a heat flux coming from the outside,
- and, once the change of state of said at least one phase change material of the first thermal barrier element (3a) has been performed, another change of state is promoted by a temporary supply of thermal energy issued from said means (20, 22; 24; 26) for temporarily supplying thermal energy.
